# EUROPEAN PATENT SPECIFICATION

(11) **EP 1 745 998 B1**
(45) Date of publication and mention of the grant of the patent: **26.11.2008**
(21) Application number: 05106567.0
(22) Date of filing: 18.07.2005
(51) Int. Cl.: B60S 1/40

(54) **Windscreen wiper device**
Scheibenwischvorrichtung
Dispositif d'essuie-glace

(43) Date of publication of application: 24.01.2007
(73) Proprietor: Federal-Mogul S.A., 6790 Aubange (BE)
(72) Inventor: Boland, Xavier, 6700, Arlon (BE); Henin, Pierre, 6730, Bellefontaine (BE)
(74) Representative: Hooiveld, Arjen Jan Winfried

(56) References cited:
- DE-A1- 10 038 992
- DE-A1- 10 040 530
- DE-A1- 10 330 218
- US-A- 4 114 227
- US-A- 4 300 259

## Description

The invention relates to a windscreen wiper device of the flat blade type comprising an elastic, elongated carrier element, as well as an elongated wiper blade of a flexible material, which can be placed in abutment with a windscreen to be wiped, which wiper blade includes opposing longitudinal grooves on its longitudinal sides, in which grooves spaced-apart longitudinal strips of the carrier element are disposed, wherein neighbouring ends of said longitudinal strips are interconnected by a respective connecting piece, which windscreen wiper device comprises a connecting device for connecting said wiper blade to an oscillating arm, wherein said connecting device is pivotally connected to said oscillating arm near its free end about a pivot axis of a transverse pivot pin provided on said oscillating arm or on said connecting device, and wherein said windscreen wiper device comprises securing means for securing said oscillating arm or said connecting device on the pivot pin.

Such a windscreen wiper device is known from international patent publication no. WO 00/73113 (Robert Bosch GmbH). The prior art windscreen wiper device is in particular designed as a "yokeless" wiper device, wherein use is no longer made of several yokes pivotally connected to each other, but wherein the wiper blade is biassed by the carrier element, as a result of which it exhibits a specific curvature. The oscillating arm of the prior art windscreen wiper device comprises a transverse pivot pin on one side thereof, which is inserted sideways into a through hole of the connecting device. In order to secure said connecting device on the pivot pin said oscillating arm is provided with an extension comprising said pivot pin and a L-shaped shoulder which projects out in the direction of said pivot pin and across said wiper blade and at the free end of which is disposed a leg facing the windscreen.

A disadvantage of a windscreen wiper device known from the above international patent publication is that the oscillating arm as a whole needs to be replaced, for example in case the mutual alignment of said pivot pin and said L-shaped shoulder diminishes over time.

To obviate these disadvantages document DE 10040530 discloses a windscreen wiper device of the flat blade type according to the preamble of claim 1, wherein said securing means comprises a separate, detachable constructional element mounted on said pivot pin, wherein said pivot pin extends sidewardly from said free end of said oscillating arm into co-axial holes of said connecting device and said constructional element, and wherein a lip on said constructional element is movable between a first position securing said wiper blade onto said oscillating arm and a second position releasing said wiper blade from said oscillating arm.

According to the invention said windscreen wiper device of the flat blade type is characterised in that in said first position a leg of an U-shaped cross-section of said free end of said oscillating arm facing towards said connecting device is secured between said lip and said constructional element, and wherein in said second position said leg is released from said connecting device.

In a preferred embodiment of a windscreen wiper device in accordance with the invention. Particularly, said lip is a resilient lip rotatable along an hinge axis between said first position retaining said wiper blade onto said oscillating arm and said second position releasing said wiper blade from said oscillating arm.

In another preferred embodiment of a windscreen wiper device in accordance with the invention said constructional element is mounted on top of said connecting device. Preferably, said co-axial holes of said connecting device and said constructional element are blind holes.

In another preferred embodiment of a windscreen wiper device according to the invention said pivot pin extends sidewardly from said free end of said oscillating arm into co-axial holes of said connecting device and said constructional element, wherein said constructional element is mounted on said pivot pin between legs of an U-shaped cross-section of said free end of said oscillating arm. Particularly, said constructional element is snapped onto said pivot pin.

In another preferred embodiment of a windscreen wiper device in accordance with the invention said co-axial hole of said connecting device is a blind hole, wherein said co-axial hole of said constructional element has an open circumference. Preferably, said constructional element has a sidewardly extending arm snapped onto said connecting device.

The invention will now be explained in more detail with reference to figures illustrated in a drawing, wherein:
- Figure 1 is a perspective, schematic view of a first preferred embodiment of a windscreen wiper device according to the invention, wherein the oscillating arm and the wiper blade are connected to each other;
- Figure 2 corresponds to figure 1, wherein the oscillating arm and the wiper blade are disconnected from each other;
- Figure 3 is a cross-sectional view along the line III-III of figure 1;
- Figure 4 is a perspective, schematic view of a second preferred embodiment of a windscreen wiper device according to the invention, wherein the oscillating arm and the wiper blade are connected to each other;
- Figure 5 corresponds to figure 4, wherein the oscillating arm and the wiper blade are disconnected from each other; and
- Figure 6 shows a detail of the connection between the oscillating arm and the wiper blade of figure 4.

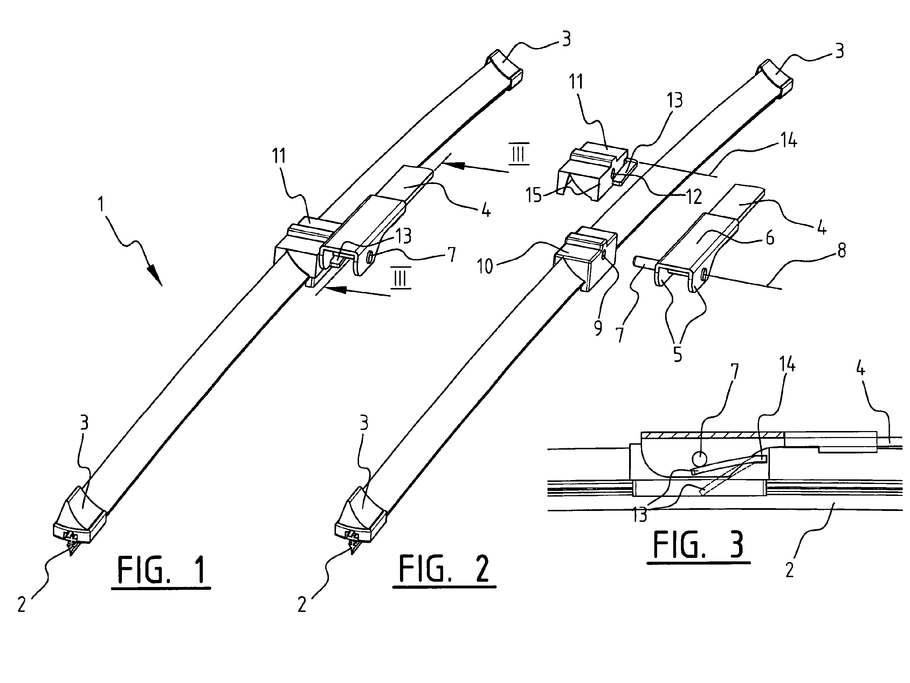

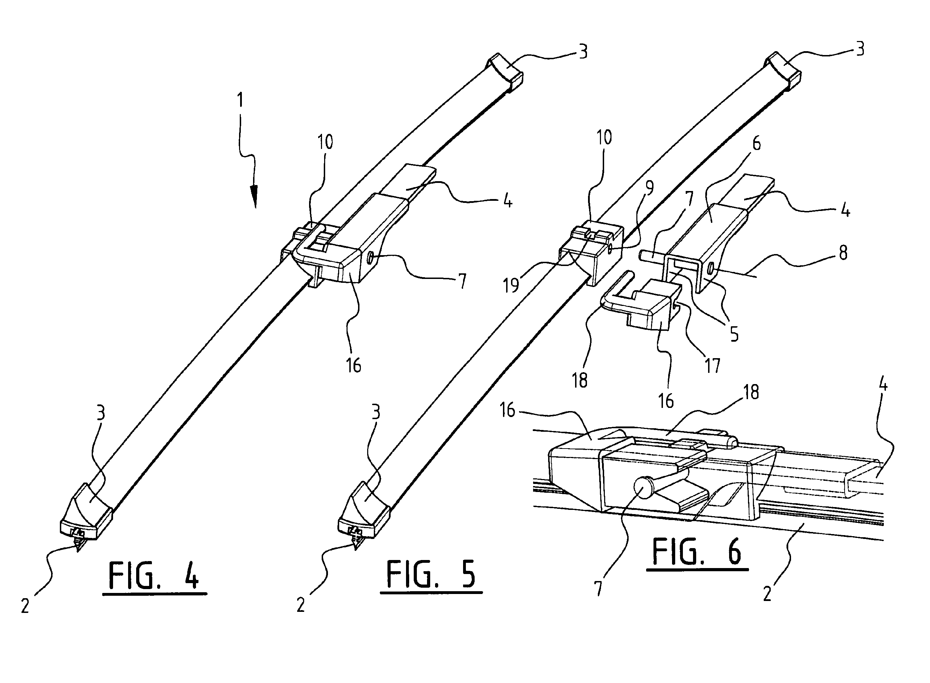

The first and second preferred embodiments of figures 1 and 4 both relate to a windscreen wiper device 1 having a so-called flat blade 2. Said windscreen wiper device 1 in a usual manner is built up of an elastomeric wiper blade 2, in the longitudinal sides of which opposing longitudinal grooves are formed, and of longitudinal strips made of spring band steel, which are fitted in said longitudinal grooves. Said strips form a flexible carrier element for the wiper blade 2, as it were, which is thus biassed in a curved position (the curvature in operative position being that of a windscreen to be wiped). Neighbouring ends of the strips are interconnected on either side of the windscreen wiper device 1 by means of connecting pieces 3 functioning as clamping members. In these embodiments, the connecting pieces 3 are separate constructional elements, which may be form-locked ("positive locking" or "having a positive fit") or force-locked to the ends of the strips. In another preferred embodiment, said connecting pieces 3 are in one piece with the strips made of spring band steel. In the latter case said connecting pieces form transverse bridges for the strips, as it were.

In both embodiments of figures 1 and 4 the free end of the oscillating arm 4 has a U-shaped cross-section, wherein legs 5 of the U-shaped cross-section are orientated towards a windscreen to be wiped and wherein a base 6 of the U-shaped cross-section is orientated parallel to a windscreen to be wiped. Between the legs 5 of the U-shaped cross-section and protruding in a direction towards the wiper blade 2 is a joint pin or pivot pin 7 whose pivot axis 8 extends in a direction of the oscillating movement of the oscillating arm 4. The diameter of the pivot pin 7 is adapted to the diameter of a hole or bearing bore 9 in a connecting device 10. The connecting device 10 serves to connect the wiper blade 2 to the oscillating arm 4, wherein the connecting device 10 is pivotally connected to the oscillating arm 4 near its free end about the pivot axis 8 of the pivot pin 7.

Referring to the first preferred embodiment of figures 1, 2 and 3, a single, detachable constructional element 11 having a hole or bearing bore 12 and mounted on the pivot pin 7 is provided. More in particular, in order to connect the connecting device 10 and thus the wiper blade 2 to the oscillating arm 4, the joint pin or pivot pin 7 extending sidewardly from the free end of the oscillating arm 4 is inserted into the co-axial holes 9,12 of the connecting device 10 and the element 11. In order to secure or retain the connecting device 10 (and thus the wiper blade 2) onto the oscillating arm 4 a resilient lip 13 on the element 11 is rotated along an hinge axis 14 into a first position drawn in continuous lines in figure 3. For releasing the connecting device 10 (and thus the wiper blade 2) from the oscillating arm 4 the resilient lip 13 is rotated along the hinge axis 14 into a second position drawn in dashed lines in figure 3. The resilient lip 13 should be moved into the second position as well in order to allow insertion of the pivot pin 7 into the co-axial holes 9,12 of the connecting device 10 and the element 11. In said first position a leg 5 of the U-shaped cross-section of the free end of the oscillating arm 4 facing towards the connecting device 10 is secured between the lip 13 and a cheek 15 of the element 11. In the second position said leg 5 is released from the connecting device 10. As can be seen from figures 1, 2 and 3 the element 11 is mounted on top of the connecting device 10. Preferably, the co-axial holes 9,12 of the connecting device 10 and the element 11 are blind holes.

With reference to the second preferred embodiment of figures 4, 5 and 6, a single, detachable constructional element 16 having a hole or bearing bore 17 with an open circumference is provided. For connecting the connecting device 10 and thus the wiper blade 2 to the oscillating arm 4, the joint pin or pivot pin 7 extending sidewardly from the free end of the oscillating arm 4 is inserted into the hole 9 of the connecting device 10. The element 16 is then mounted on the pivot pin 7 between the legs 5 of the U-shaped cross-section of the free end of the oscillating arm 4. More in particular, for securing or retaining the connecting device 10 (and thus the wiper blade 2) onto the oscillating arm 4 the element 16 is snapped or clipped onto the pivot pin 7, while a sidewardly extending, L-shaped arm 18 is snapped or clipped into a recess 19 of the connecting device 10. The connecting device 10 (and thus the wiper blade 2) can be released from the oscillating arm 4 by dismounting the element 16 from the pivot pin 7.

In both preferred embodiments the connecting device 10 and the elements 11,15 are preferably made of a thermoplastic material.

The invention is not restricted to the variants shown in the drawing, but it also extends to other embodiments that fall within the scope of the appended claims.

## Claims

1. A windscreen wiper device (1) of the flat blade type comprising an elastic, elongated carrier element, as well as an elongated wiper blade (2) of a flexible material, which can be placed in abutment with a windscreen to be wiped, which wiper blade (2) includes opposing longitudinal grooves on its longitudinal sides, in which grooves spaced-apart longitudinal strips of the carrier element are disposed, wherein neighbouring ends of said longitudinal strips are interconnected by a respective connecting piece (3), which windscreen wiper device (1) comprises a connecting device (10) for connecting said wiper blade (2) to an oscillating arm (4), wherein said connecting device (10) is pivotally connected to said oscillating arm (4) near its free end about a pivot axis (8) of a transverse pivot pin (7) provided on said oscillating arm (4) or on said connecting device (10), and wherein said windscreen wiper device (1) comprises securing means for securing said oscillating arm (4) or said connecting device (10) on the pivot pin (7), said securing means comprising a separate, detachable constructional element (11,16) mounted on said pivot pin (7), wherein said pivot pin (7) extends sidewardly from said free end of said oscillating arm (4) into co-axial holes (9,12) of said connecting device (10) and said constructional element (11), and wherein a lip (13) on said constructional element (11) is movable between a first position securing said wiper blade (2) onto said oscillating arm (4) and a second position releasing said wiper blade (2) from said oscillating arm (4), **characterized in that** in said first position a leg (5) of an U-shaped cross-section of said free end of said oscillating arm (4) facing towards said connecting device (10) is secured between said lip (13) and said constructional element (11), and wherein in said second position said leg (5) is released from said connecting device (10).

2. A windscreen wiper device (1) according to claim 1, wherein said lip (13) is a resilient lip rotatable along an hinge axis (14) between said first position retaining said wiper blade (2) onto said oscillating arm (4) and said second position releasing said wiper blade (2) from said oscillating arm (4).

3. A windscreen wiper device (1) according to claim 1 or 2, wherein said constructional element (11) is mounted on top of said connecting device (10).

4. A windscreen wiper device (1) according to claim 1, 2 or 3, wherein said co-axial holes (9,12) of said connecting device (10) and said constructional element (11) are blind holes.

5. A windscreen wiper device (1) according to claim 1, wherein said pivot pin (7) extends sidewardly from said free end of said oscillating arm (4) into co-axial holes (9,17) of said connecting device (10) and said constructional element (16), and wherein said constructional element (16) is mounted on said pivot pin (7) between legs (5) of an U-shaped cross-section of said free end of said oscillating arm (4).

6. A windscreen wiper device (1) according to claim 5, wherein said constructional element (16) is snapped onto said pivot pin (7).

7. A windscreen wiper device (1) according to claim 5 or 6, wherein said co-axial hole (9) of said connecting device (10) is a blind hole, and wherein said co-axial hole (17) of said constructional element (16) has an open circumference.

8. A windscreen wiper device (1) according to claim 5, 6 or 7, wherein said constructional element (16) has a sidewardly extending arm (18) snapped onto said connecting device (10).

## Patentansprüche

1. Scheibenwischvorrichtung (1) mit flachem Wischblatt, enthaltend ein elastisches, längliches Trägerelement sowie ein längliches Wischblatt (2) aus einem flexiblen Material, das in Anlage an die zu wischende Windschutzscheibe gebracht werden kann, welches Wischblatt (2) entgegengesetzte Längsrillen an seinen Längsseiten aufweist, in denen voneinander beabstandete Längsstreifen des Trägerlements angeordnet sind, wobei benachbarte Enden der Längsstreifen jeweils durch ein Verbindungsstück (3) miteinander verbunden sind, welche Scheibenwischvorrichtung (1) eine Verbindungsvorrichtung (10) zum Verbinden des Wischblatts (2) mit einem Schwingarm (4) aufweist, wobei die Verbindungsvorrichtung (10) schwenkbar mit dem Schwingarm (4) nahe seinem freien Ende um eine Schwenkachse (8) eines quer angeordneten Schwenklagerstifts (7) verbunden ist, der an dem Schwingarm (4) oder an der Verbindungsvorrichtung (10) vorgesehen ist, und wobei die Scheibenwischvorrichtung (1) eine Sicherungseinrichtung zum Sichern des Schwingsarms (4) oder der Verbindungsvorrichtung (10) an dem Schwenklagerstift (7) aufweist, die ein gesondertes, lösbares Bauelement (11, 16) aufweist, das an dem Schwenkstrift (7) angebracht ist, wobei der Schwenklagerstift (7) sich seitwärts von dem freien Ende des Schwingarms (4) in koaxiale Löcher (9, 12) der Verbindungsvorrichtung (10) und das Bauelement (11) erstreckt und eine Lippe an dem Bauelement (11) zwischen einer ersten Stellung, die das Wischblatt (2) an dem Schwingarm (4) sichert, und einer zweiten Stellung, die das Wischblatt (2) von dem Schwingarm (4) freigibt, beweglich ist, **dadurch gekennzeichnet dass** in der ersten Stellung ein Schenkel (5) eines U-förmigen Querschnitts des freien Endes des Schwingarms (4), der gegen die Verbindungsvorrichtung (10) weist, zwischen der Lippe (13) und dem Bauelement (11) gesichert ist und in der zweiten Stellung der Schenkel (5) von der Verbindungsvorrichtung (10) freigegeben ist.

2. Scheibenwischvorrichtung (1) nach Anspruch 1, bei der die Lippe (13) eine elastische Lippe ist, die längs einer Gelenkachse (14) zwischen der ersten, das Wischblatt (2) an dem Schwingarm (4) haltenden Stellung und der zweiten, das Wischblatt (2) von dem Schwingarm (4) freigebenden Stellung drehbar ist.

3. Scheibenwischvorrichtung (1) nach Anspruch 1 oder 2, bei der das Bauelement (11) an der Oberseite der Verbindungsvorrichtung (10) angebracht ist.

4. Scheibenwischvorrichtung (1) nach Anspruch 1, 2 oder 3, bei der die koaxialen Löcher (9, 12) der Verbindungsvorrichtung (10) und des Bauelements (11) Sacklöcher sind.

5. Scheibenwischvorrichtung (1) nach Anspruch 1, bei der sich der Schwenklagerstift (7) seitwärts vom freien Ende des Schwingarms (4) in koaxiale Löcher (9, 17) der Verbindungsvorrichtung (10) und des Bauelements (16) erstrecken und das Bauelement (16) an dem Schwenklagerstift (7) zwischen Schenkeln (5) eines U-förmigem Querschnitts des freien Endes des Schwingarms (4) angebracht ist.

6. Scheibenwischvorrichtung (1) nach Anspruch 5, bei der das Bauelement (16) auf den Schwenklagerstift (7) aufgerastet ist.

7. Scheibenwischanordnung (1) nach Anspruch 5 oder 6, bei der das koaxiale Loch (9) der verbindungsvorrichtung (10) ein Sackloch ist und das koaxiale Loch (17) des Bauelements (16) einen offenen Umfang hat.

8. Scheibenwischanordnung (1) nach Anspruch 5, 6 oder 7, bei der das Bauelement (16) einen sich seitwärts erstreckenden Arm (18) hat, der auf die Verbindungsvorrichtung (10) aufgerastet ist.

## Revendications

1. Dispositif d'essuie glace (1) de type à balai plat comprenant un élément porteur élastique allongé, ainsi qu'un balai d'essuie glace allongé (2) en matériau flexible, qui peut être mis en aboutement avec un pare brise à essuyer, lequel balai d'essuie glace (2) inclut des rainures longitudinales opposées sur ses côtés longitudinaux, rainures dans lesquelles sont disposées des bandes longitudinales écartées de l'élément porteur, dans lequel les extrémités voisines des dites bandes longitudinales sont interconnectées par une pièce de connexion respective (3), lequel dispositif d'essuie glace (1) comprend un dispositif de connexion (10) destiné à connecter ledit balai d'essuie glace (2) à un bras oscillant (4), dans lequel ledit dispositif de connexion (10) est connecté de manière pivotante audit bras oscillant (4) à proximité de son extrémité libre autour d'un axe de pivotement (8) d'une goupille de pivotement transversale (7) disposée sur ledit bras oscillant (4) ou sur ledit dispositif de connexion (10), et dans lequel ledit dispositif d'essuie glace (1) comprend des moyens de fixation permettant de fixer ledit bras oscillant (4) ou ledit dispositif de connexion (10) à la goupille de pivotement (7), lesdits moyens de fixation comprenant un élément de construction séparé détachable (11, 16) monté sur ladite goupille de pivotement (7), dans lequel ladite goupille de pivotement (7) s'étend latéralement par rapport à ladite extrémité libre dudit bras oscillant (4) en pénétrant dans des trous coaxiaux (9, 12) dudit dispositif de connexion (10) et dudit élément de construction (11), et dans lequel une lèvre (13) dudit élément de construction (11) est mobile entre une première position où ledit balai d'essuie glace (2) est fixé audit bras oscillant (4) et une deuxième position où ledit balai d'essuie glace (2) est libéré dudit bras oscillant (4), **caractérisé en ce que** dans ladite première position, une patte (5) d'une section transversale en forme de U de ladite extrémité libre dudit bras oscillant (4) opposée audit dispositif de connexion (10) est serrée entre ladite lèvre (13) et ledit élément de construction (11), et dans lequel, dans ladite deuxième position, ladite patte (5) est libérée dudit dispositif de connexion (10).

2. Dispositif d'essuie glace (1) selon la revendication 1, dans lequel ladite lèvre (13) est une lèvre résiliente qui peut tourner autour d'un axe d'articulation (14) entre ladite première position dans laquelle ledit balai d'essuie glace (2) est retenu sur ledit bras oscillant (4) et ladite deuxième position dans laquelle ledit balai d'essuie glace (2) est libéré dudit bras oscillant (4).

3. Dispositif d'essuie glace (1) selon la revendication 1 ou 2, dans lequel ledit élément de construction (11) est monté au dessus dudit dispositif de connexion (10).

4. Dispositif d'essuie glace (1) selon la revendication 1, 2 ou 3, dans lequel lesdits trous coaxiaux (9, 12) dudit dispositif de connexion (10) et dudit élément de construction (11) sont des trous borgnes.

5. Dispositif d'essuie glace (1) selon la revendication 1, dans lequel ladite goupille de pivotement (7) s'étend latéralement par rapport à ladite extrémité libre dudit bras oscillant (4) en pénétrant dans des trous coaxiaux (9, 17) dudit dispositif de connexion (10) et dudit élément de construction (16), et dans lequel ledit élément de construction (16) est monté sur ladite goupille de pivotement (7) entre les pattes (5) d'une section transversale en forme de U de ladite extrémité libre dudit bras oscillant (4).

6. Dispositif d'essuie glace (1) selon la revendication 5, dans lequel ledit élément de construction (16) est encliqueté sur ladite goupille de pivotement (7).

7. Dispositif d'essuie glace (1) selon la revendication 5 ou 6, dans lequel ledit trou coaxial (9) dudit dispositif de connexion (10) est un trou borgne, et dans lequel ledit trou coaxial (17) dudit élément de construction (16) a une circonférence ouverte.

8. Dispositif d'essuie glace (1) selon la revendication 5, 6 ou 7, dans lequel ledit élément de construction (16) possède un bras en extension latérale (18) qui est encliqueté sur ledit dispositif de connexion (10).
